# FASCICULE DE BREVET EUROPEEN

(11) **EP 0 870 450 B1**
(45) Date de publication et mention de la délivrance du brevet: **02.07.2003**
(21) Numéro de dépôt: 98400873.0
(22) Date de dépôt: 09.04.1998
(51) Int. Cl.: A47F 3/04

(54) **Paroi ou porte d'enceinte réfrigérée**
Wand oder Tür für einen Kühlraum
Wall or door for a refrigerated cabinet

(30) Priorité: 31.07.1997 FR 9709772; 11.04.1997 FR 9704509; 07.07.1997 FR 9708585
(43) Date de publication de la demande: 14.10.1998
(73) Titulaire: SAINT-GOBAIN GLASS FRANCE, 92400 Courbevoie (FR)
(72) Inventeur: Florentin, Jean-Michel, 02200 Soisson (FR); Villeminot, Eric, 02400 Chateau-Thierry (FR); Margerand, Stéphane, 77100 Nanteuil-Les-Meaux (FR); Poix, René, 60400 Noyon (FR)
(74) Mandataire: Muller, René

(56) Documents cités:
- EP-A- 0 121 481
- EP-A- 0 406 200
- EP-A- 0 421 239
- EP-A- 0 645 516
- EP-B- 0 127 546
- WO-A-87/03327
- WO-A-91/02878
- WO-A-93/15296
- WO-A-96/12862
- WO-A-98/04802
- DE-A- 3 240 639
- FR-A- 921 946
- FR-A- 2 728 559

## Description

La présente invention concerne une porte ou paroi d'enceinte vitrée réfrigérée.

L'invention sera décrite plus particulièrement pour une porte ou paroi d'une enceinte réfrigérée dans lequel sont exposés des produits froids ou congelés.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une "vitrine" réfrigérée dont la dénomination commune est "meuble frigorifique de vente". Il existe plusieurs variantes de ces "vitrines". Certaines ont la forme d'armoire et alors, c'est la porte elle-même qui est transparente, d'autres constituent des coffres et c'est le couvercle horizontal qui est vitré pour permettre l'observation du contenu et encore d'autres constituent des vitrines comptoirs et c'est la partie qui sépare le public des marchandises qui est vitré. Quelle que soit la variante de ces "vitrines", il est possible également de réaliser des parois vitrées afin que l'ensemble du contenu soit visible de l'extérieur.

L'invention sera décrite plus particulièrement pour une porte ou paroi d'armoire ou de coffre réfrigéré.

Dans ces types de présentoirs, il est nécessaire que les marchandises restent parfaitement visibles de la clientèle afin qu'il soit possible de présélectionner les marchandises sans ouvrir la "vitrine". En conséquence, il faut éviter que les parties vitrées des "vitrines" ne se couvrent de condensation.

Pour éviter les condensations, la méthode qu'on utilise consiste en général à maintenir la face du vitrage du côté de l'environnement à une température supérieure au point de rosée de l'atmosphère concernée. Ce but est atteint en augmentant les performances d'isolation du vitrage et parfois, en plus, en faisant chauffer la face du côté "chaud". Le moyen le plus simple pour améliorer les performances d'isolation thermique d'un vitrage simple est de le remplacer par un vitrage multiple. Cette technique est facile à mettre en oeuvre dans le cas des vitrines armoires ou dans celui des vitrines-coffres, en effet les vitrages multiples, constitués de deux verres plan montés parallèlement entre eux et séparés par une lame d'air ou de gaz, équipent facilement des portes d'armoires ou des couvercles de coffre. Cependant, l'utilisation de tels vitrages multiples ne s'avère pas totalement satisfaisante du point de vue thermique.

Plusieurs solutions ont été envisagées afin d'améliorer encore les performances d'isolation thermique de ces vitrages multiples.

Ainsi le brevet US 4,382,177 concerne des vitrages simples ou double montés dans des portes d'armoires frigorifiques ou des couvercles horizontaux de congélateurs-coffres. Les vitrages sont recouverts sur leur face du côté froid, d'un film recouvert lui-même d'une couche mince réfléchissant le rayonnement infrarouge. Grâce à cette couche mince, l'isolation est améliorée du côté froid, la face chaude est plus chaude et les condensations s'y produisent pour une teneur de l'air ambiant en vapeur d'eau supérieure. Cependant l'amélioration reste modeste, la température s'élève peu et la différence de teneur d'humiditié des atmosphères qui provoquent la condensation dans les deux cas, faible.

Il est connu de réaliser des vitrages comportant 3 feuilles de verre et l'une des lames d'air pouvant être remplacée par un gaz tel que le Krypton. Ces vitrages ont des propriétés d'isolation thermique améliorées vis-à-vis des vitrages multiples usuels. Cependant, ces triples vitrages sont d'une épaisseur telle que l'on crée une perte de transparence d'environ 25 % par rapport à un vitrage monolithique. Cette diminution de visibilité au travers du vitrage est encore accentuée si au moins une des feuilles de verre est revêtue d'une couche mince telle que, par exemple, une couche réfléchissant le rayonnement infrarouge afin de diminuer nettement les déperditions thermiques au travers du vitrage. La perte de transparence est alors telle qu'il est nécessaire d'augmenter l'éclairage interne de l'enceinte, ce qui crée une augmentation générale de la consommation d'énergie de l'enceinte climatique.

Il est également connu de chauffer une face d'un vitrage monté dans des portes ou parois d'enceinte réfrigérée au-dessus de la température du point de rosée de l'air ambiant "chaud". Pour cela, au moins une des feuilles de verre est revêtue sur une de ses faces d'une couche mince conductrice ou semi-conductrice. Les méthodes pour déposer sur le verre des couches minces conductrices ou semi-conductrices sont nombreuses. On connaît en particulier plusieurs moyens qui permettent de pyrolyser sur le verre chaud des sels organiques qui se transforment en oxyde conducteurs. Parmi ceux-ci, celui du brevet EP-0 125 153 permet de déposer une couche mince à base d'oxyde d'étain dopé au fluor sur du verre plat en continu entre la sortie d'un bain "float" et l'entrée dans l'étenderie de recuisson. Ce procédé permet de disposer de plaques de verre à couche transparente et conductrice de dimensions infinies pour un prix de revient réduit. De tels vitrages ainsi revêtus sont généralement chauffés de manière continue surtout si la température du point de rosé de l'air ambiant "chaud" est élevé. Ce chauffage en continu augmente considérablement la consommation d'énergie générale de l'enceinte réfrigérée.

Ainsi, le brevet US 4,260,876 propose un système de contrôle du chauffage applicable aux enceintes réfrigérées. Un système de capteurs répond à la différence entre la teneur en humidité de l'atmosphère ambiant "chaud" et la température de surface de la partie de l'enceinte réfrigérée concernée afin de contrôler la consommation d'énergie de chauffage. Cependant un tel système ne diminue pas sensiblement la consommation d'énergie générale.

En effet, même si le chauffage est effectué de façon intermittente, les temps de chauffage sont généralement plus importants que les temps de non-chauffage.

Par ailleurs, quelle que soit la solution envisagée par le constructeur, il est usuel de réaliser les portes ou parois vitrées à partir de vitrages multiples. De tels vitrages présentent une épaisseur et un poids important. Ainsi, du fait de leur structure, il est nécessaire de les associer à un cadre support qui leur confère une bonne tenue mécanique. De cette manière, ces vitrages multiples sont d'un encombrement tel qu'il se répercute sur la structure et l'apparence des enceintes dans lesquelles ils sont montés.

L'invention a pour but de réaliser une porte ou paroi d'enceinte vitrée réfrigérée obviant aux différents inconvénients énoncés précédemment, notamment une porte ou paroi vitrée ne se couvrant pas de condensation, ayant un faible encombrement et n'augmentant pas la consommation d'énergie de l'enceinte réfrigérée.

L'invention propose ainsi une porte ou paroi d'enceinte vitrée réfrigérée telle qu'elle est constituée essentiellement d'un panneau isolant composé d'au moins deux substrats en verre entre lesquels un vide a été réalisé, séparés l'un de l'autre par des plots répartis sur toute la surface et réunis à leur périphérie par un joint de scellage minéral.

L'invention substitue donc aux vitrages isolants classiques un vitrage isolant constitué d'au moins deux substrats en verre entre lesquels un vide a été réalisé. Ce type de vitrage isolant sous vide présente pour une épaisseur totale plus faible que celle des vitrages isolants classiques des propriétés d'isolation thermique nettement améliorées.

La demande de brevet EP-A-0 645 516 décrit un vitrage isolant composé de deux feuilles de verre séparées l'une de l'autre par un faible espace dans lequel le vide a été réalisé.

Les feuilles de verre sont séparées l'une de l'autre par des plots répartis sur toute la surface et réunies à leur périphérie par un joint de scellage minéral. La structure d'un tel vitrage présente l'avantage de lui conférer une rigidité et une tenue équivalentes à celles d'un vitrage monolithique d'épaisseur égale à la somme des épaisseurs des feuilles de verre, c'est-à-dire que les feuilles de verre se comportent comme une seule dont l'épaisseur est la somme de celle des deux feuilles de verre. De cette manière, il n'est plus nécessaire d'associer ce type de vitrage à un cadre support. Ainsi, l'encombrement est fortement diminué et le montage dans l'enceinte réfrigérée sensiblement simplifié.

Selon une variante préférée de l'invention, au moins un substrat en verre du panneau isolant est recouvert par une ou plusieurs couches fonctionnelles sur au moins une de ses faces. De telles couches sont, par exemple, des couches basses émissives telles que décrites dans le brevet français FR-2 701 474 ou dans le brevet français FR-2 728 559. Dans le cas où une couche de ce type est réalisée sur une face interne du vitrage, c'est-à-dire une face ultérieurement au contact du vide, l'invention prévoit, de préférence, l'élimination de ladite couche sur la zone périphérique de la surface correspondant à la zone recouverte par le joint de scellage ; cette élimination peut permettre une meilleure adhérence dudit joint de scellage.

Avantageusement, la transmission lumineuse TL du panneau isolant est supérieure à 64% et de préférence supérieure à 70%, et le coefficient thermique K est inférieur à 1W/m².°K.

De préférence, le poids du panneau isolant est inférieur à 25 kg/m² et le coefficient thermique K est inférieur à 1W/m².°K.

Dans le tableau n° 1, ci-dessous, sont résumées les caractéristiques de différents types de panneaux isolants. Ce sont dans l'ordre :
□ panneau isolant n° 1 :
   verre/couche planitherm®/air/verre
□ panneau isolant n° 2 :
   verre/couche planitherm®/air/verre/air/verre
□ panneau isolant n° 3 :
   verre/couche planitherm®/krypton/verre/krypton/verre
□ panneau isolant n° 4 (panneau isolant selon l'invention) :
   verre/couche planitherm®/vide/verre
avec comme couche planitherm® une couche fine à base d'argent réalisée sous vide dont l'empilement est :

SnO₂/ZnO/Ag/NiCr/Si₃N₄/SnO₂

**TABLEAU 1**

| **Panneau isolant** | **N° 1** | **N° 2** | **N° 3** | **N° 4** |
|---|---|---|---|---|
| Epaisseur (mm) et nombre de verre | 4 X 2 | 4 X 3 | 4 X 3 | 4 X 2 |
| Epaisseur (mm) et nombre de lame de gaz | 20 X 1 | 6,5 X 2 | 8 X 2 | - |
| Poids (kg/m²) | 20 | 30 | 30 | 20 |
| Epaisseur totale du panneau (mm) | 28 | 25 | 28 | 8 |
| TL (%) (valeur moyenne) | 76 | 69 | 69 | 76 |
| K(W/m².K) | 1,4 | 1,8 | 0,9 | 0,7 |

Dans ce tableau, il ressort clairement les avantages incontestables du panneau isolant n°4, selon l'invention.

En effet, à nombre de feuilles de verre égal, et à indice de transmission lumineuse TL égale, les performances thermiques du panneau isolant n°4 selon l'invention sont bien meilleures, d'autant plus que le panneau isolant n°1 possède une lame d'air d'épaisseur très importante.

De même, pour un nombre de feuilles de verre plus important (panneaux isolants n° 2 et n° 3), les performances thermiques et la transmission lumineuse sont plus faibles que celles du panneau isolant n° 4 selon l'invention, même en présence d'un gaz rare tel que le krypton.

Par ailleurs, les panneaux isolants n° 3 remplissent bien les conditions de performances thermiques et de transmission lumineuse, mais la différence d'épaisseur totale du panneau est supérieure de 20 mm et la différence de poids supérieure à 10 kg/m², par rapport au panneau isolant n° 4, ce qui rend l'utilisation comme portes ou parois d'enceinte réfrigérée peu confortable et peu esthétique.

Dans le tableau n°2, ci-dessous, sont résumées les caractéristiques de différents types de panneaux isolants, les panneaux numérotés de 5 à 7 étant connus de l'état de la technique et déjà commercialisés. Ils sont donnés à titre d'exemples comparatifs. Ce sont dans l'ordre :
□ panneau isolant n° 5 :
verre/couche planitherm®/air/couche EK®/verre avec comme couche planitherm® une couche fine à base d'argent réalisée sous vide dont l'empilement est :

   SnO₂/ZnO/Ag/NiCr/Si₃N₄/SnO₂

   et comme couche EKO® une couche de SnO₂ dopée fluor appliquée par pyrolyse

□ panneau isolant n° 6 :
verre/couche EKO®/air/verre/air/verre
avec comme couche EKO® une couche identique à celle du panneau isolant n°5
□ panneau isolant n° 7 :
verre/couche plenitherm®/krypton/verre/krypton/couche planitherm®/ verre
avec comme couche planitherm® une couche fine à base d'argent réalisée sous vide dont l'empilement est :

SnO₂/ NiCr/Ag/NiCr/SnO₂

□ panneau isolant n° 4 (panneau isolant selon l'invention) :
verre/couche planitherm®/vide/verre
avec comme couche planitherm® une couche identique à celle du panneau isolant n°5

**TABLEAU 2**

| **Panneau isolant** | **N° 5** | **N° 6** | **N° 7** | **N° 4** |
|---|---|---|---|---|
| Epaisseur (mm) et nombre de verre | 4 X 2 | 4 X 3 | 4 X 3 | 4 X 2 |
| Epaisseur (mm) et nombre de lame de gaz | 20 X 1 | 6,5 X 2 | 8 X 2 | |
| Poids (kg/m²) | 20 | 30 | 30 | 20 |
| Epaisseur totale du panneau (mm) | 28 | 25 | 28 | 8 |
| TL (%) (valeur moyenne) | 67 | 64 | 64 | 76 |
| K (W/m².K) valeur moyenne | 1,4 | 2 | 0,7 | 0,7 |
| Puissance électrique pour désembuage (W/m²) | > 100 | 140 | - | - |

De ce tableau, il ressort clairement que :
→ à nombre de feuilles de verre égal et à poids égal, le panneau isolant n°4 selon l'invention donne de bien meilleures performances thermiques pour une épaisseur totale du panneau bien inférieure que le panneau isolant n°5 bien que celui-ci remplisse les conditions de transmission lumineuse.

D'ailleurs, pour être utilisable en tant que porte ou paroi d'enceinte réfrigérée, le panneau isolant n°5 doit être chauffé sur au moins une face (ici grâce à la couche EKO®) et demande une puissance électrique de désembuage supérieure à 100 W/m².
→ le panneau isolant n°6 ne remplit aucune des conditions requises selon l'invention et nécessite, en cas d'utilisation comme porte ou paroi d'enceinte réfrigérée une puissance électrique de désembuage d'environ 140 W/m²,
→ à coefficient thermique équivalent et inférieur à 1, le panneau isolant n°4 selon l'invention donne de bien meilleures conditions de transmission lumineuse que le panneau isolant n°7, celui-ci étant à la limite fixée par l'invention. De plus, le panneau isolant n°7 présente une épaisseur totale et un poids largement supérieurs à ceux du panneau isolant n°4 selon l'invention,
→ aucun des trois panneaux isolants n°5 à 7 connus de l'état de la technique pouvant être utilisés comme porte ou paroi d'enceinte réfrigérée ne présente l'ensemble des caractéristiques avantageuses du panneau isolant n°4 selon l'invention.

Selon une réalisation de l'invention, le panneau isolant est pourvu sur au moins une partie de sa surface extérieure d'au moins un profilé. On entend par profilé, tous types de profilés préfabriqués ou réalisés directement sur le panneau isolant, ayant une forme adaptée à la fonction souhaitée dudit profilé et réalisé en une matière telle que le bois ou l'aluminium ou en une matière plastique. De préférence, le profilé est un profilé en matière plastique. Avantageusement, le panneau isolant est pourvu d'un profilé sur au moins son chant. De cette manière, le chant du panneau est protégé de divers chocs pouvant intervenir notamment lors de son montage dans l'enceinte réfrigérée ou lors de sa manipulation courante. Un tel profilé sur au moins une partie de la surface extérieure du panneau isolant peut remplir diverses fonctions qui apparaîtront au fil de la description.

Selon plusieurs variantes de l'invention, le profilé est un profilé soit collé, soit extrudé ou soit surmoulé par injection réactive ou thermoplastique, le profilé collé pouvant également être un profilé préfabriqué par extrusion ou par injection. Les techniques usuelles de dépôt par extrusion ou par injection d'un profilé en matière plastique ont été largement décrites dans de nombreux documents, notamment dans les brevets européens EP-B-121 481 et EP-B-127 546. Avantageusement, la tenue mécanique de ces panneaux isolants étant équivalente à celle d'un élément monolithique, il est possible d'appliquer les techniques usuelles de dépôt sur ces panneaux isolants sans risque de dégradation ou d'éclatement même lorsqu'il est nécessaire d'appliquer de fortes pressions.

De préférence, le panneau isolant est pourvu d'éléments de fixation et d'accessoires, tels que des charnières et des poignées si la fonction remplie par ledit panneau isolant est celle d'une porte, ou tels que des systèmes de vis-écrou ou des éléments d'encliquetage si la fonction remplie est celle d'une paroi.

Selon une variante de l'invention, les éléments de fixation et les accessoires sont associés au panneau isolant par l'intermédiaire de trous traversant l'épaisseur de celui-ci. Cette réalisation présente l'avantage de réaliser un montage de type V.E.A. (Vitrage Extérieur Accroché) dans lequel l'élément de fixation est de type affleurant du côté extérieur de l'enceinte réfrigérée. Ainsi, le panneau isolant, une fois fixée, paraît, vu de l'extérieur, dépourvu de tout élément de fixation "débordant", ce qui est particulièrement esthétique.

Selon une autre variante de l'invention, les éléments de fixation et les accessoires sont collés sur le panneau isolant. Cette réalisation présente l'avantage d'effectuer soit un collage directement sur le verre, soit un collage sur un profilé en matière plastique préalablement déposé au niveau de la partie du panneau isolant concernée. Le collage doit présenter après durcissement de la colle des caractéristiques particulières telles que, par exemple, une importante résistance au cisaillement. De préférence, le collage des éléments de fixation et des accessoires sera réalisé à partir d'une colle silicone.

Selon une troisième variante de l'invention, les éléments de fixation et les accessoires sont insérés dans un profilé en matière plastique. De cette manière, il est possible de positionner les éléments de fixation de manière à ce qu'il ne soit pas visible du côté extérieur de l'enceinte. Par exemple, les éléments de fixation sont positionnés côté intérieur de l'enceinte au niveau du joint de scellage ce qui est particulièrement esthétique.

Selon un mode de réalisation préféré de l'invention, le panneau isolant est pourvu d'éléments de chauffage sur au moins sa périphérie. De cette manière, l'apparition de condensation en bordure du panneau isolant est éliminée, le bord du panneau isolant, du fait du joint de scellage créant un pont thermique, formant une zone particulièrement sensible.

Selon une variante de l'invention, un cordon de chauffage est noyé dans le joint de scellage minéral. Cette réalisation est avantageusement esthétique et facile à mettre en oeuvre.

Selon une autre variante de l'invention, un cordon de chauffage est disposé en périphérie du panneau isolant dans un profilé en matière plastique. Cette réalisation facile à mettre en oeuvre présente l'avantage du choix de la zone périphérique du panneau isolant qui va être directement chauffé. De préférence, le cordon de chauffage est disposé sur le chant du panneau face au joint de scellage du panneau isolant lorsque ce joint de scellage est conducteur. De cette manière, la chaleur est transmise aux deux feuilles de verre par conduction du joint de scellage.

Selon une troisième variante de l'invention, une couche conductrice est déposée au moins en périphérie sur au moins une des faces d'au moins un des substrats en verre du panneau isolant. Les méthodes pour déposer sur le verre des couches conductrices sont nombreuses.

Selon une réalisation de l'invention, la couche conductrice est une couche à base de pâte d'argent déposée par sérigraphie et selon une autre réalisation de l'invention, la couche conductrice est une couche mince d'oxyde métallique telle que, par exemple, une couche d'oxyde d'étain dopé au fluor déposée par pyrolyse.

Avantageusement, le dépôt d'une couche mince en périphérie d'une face d'un des substrats en verre est complété par le dépôt d'une couche mince sur une majeure partie d'une face d'un des substrats en verre. De préférence, ces deux couches sont indépendantes l'une de l'autre et sont alimentées par deux circuits électriques différents. De cette manière, le chauffage du centre du panneau isolant peut être contrôlé à l'aide, par exemple, d'un système de capteur, afin d'être utilisé qu'en cas de nécessité, c'est-à-dire lors de la formation de condensation sur la face concernée, et cela sans interférer sur le chauffage périphérique.

De préférence, le panneau isolant présente sur sa face orientée vers l'intérieur de l'enceinte réfrigérée, des joints d'étanchéité disposés en regard des montants de ladite enceinte réfrigérée.

De manière avantageuse, lorsque le panneau isolant constitue une porte, les joints d'étanchéité sont aimantés ou métallisés selon les caractéristiques des montants de l'enceinte réfrigérée en vis-à-vis.

Selon un mode de réalisation de l'invention, lesdits joints d'étanchéité sont collés ou extrudés ou encapsulés directement sur le panneau isolant.

Selon un autre mode de réalisation de l'invention, lesdits joints d'étanchéité sont collés ou extrudés ou encapsulés ou clipsés sur un profilé en matière plastique.

Selon une variante avantageuse de l'invention, le panneau isolant présente sur au moins une de ses faces, au moins une zone émaillée.

De cette manière, la zone émaillée permet d'améliorer l'esthétisme de la porte ou paroi en jouant le rôle de "cache-misère". De préférence, la zone émaillée cache le joint de scellage et recouvre les zones du panneau isolant où des éléments de fixation et des accessoires vont être intégrés au panneau isolant. De manière préférée, les deux substrats en verre présentent chacun la même zone émaillée, ainsi le panneau isolant présente la même apparence du côté orienté vers l'intérieur de l'enceinte réfrigérée et du côté orienté vers l'extérieur.

Selon une variante de l'invention, la paroi ou porte est montée affleurante avec les montants de l'enceinte réfrigérée c'est-à-dire les chants du panneau isolant font face aux montants de l'enceinte réfrigérée.

Selon une autre variante de l'invention, la paroi ou porte est montée en applique sur les montants de l'enceinte réfrigérée, c'est-à-dire que les bords verticaux de la face du panneau isolant orientée vers l'intérieur de l'enceinte réfrigérée font face aux montants de ladite enceinte réfrigérée.

Ces types de montage sont avantageusement réalisables pour plusieurs raisons. Tout d'abord, du fait de la faible épaisseur du panneau isolant, la porte ou paroi peut venir simplement en appui sur les montants de l'enceinte réfrigérée sans créer une surépaisseur trop importante qui serait inacceptable ne serait-ce que d'un point de vue esthétique. Ensuite, la structure du panneau isolant confère à la porte ou paroi une telle rigidité et une tenue suffisante qu'il n'est pas nécessaire d'associer le panneau isolant à un cadre-support comme sur les vitrages multiples usuels, cadre-support qui augmente sensiblement l'encombrement général de la porte ou paroi et donc en conséquence celui de l'enceinte réfrigérée.

La paroi ou porte selon l'invention permet, comme explicité précédemment, de réaliser une meilleure isolation thermique que les parois ou portes usuelles, pour une épaisseur et un poids inférieurs et sans augmenter, voir même en diminuant, la consommation d'énergie générale de l'enceinte réfrigérée.

Avantageusement, il est possible de prévoir un système de ventilation dans l'enceinte réfrigérée tel que, par exemple, une circulation d'air sec afin d'évacuer l'humidité possible. De préférence, une circulation d'air sec sur la face interne du panneau isolant constituant la porte est prévu afin d'assécher la face interne après chaque ouverture de la porte. Cette réalisation préférée peut être remplacée par le dépôt d'une couche mince réfléchissant le rayonnement infrarouge tel que décrit dans le brevet US 4,382,177.

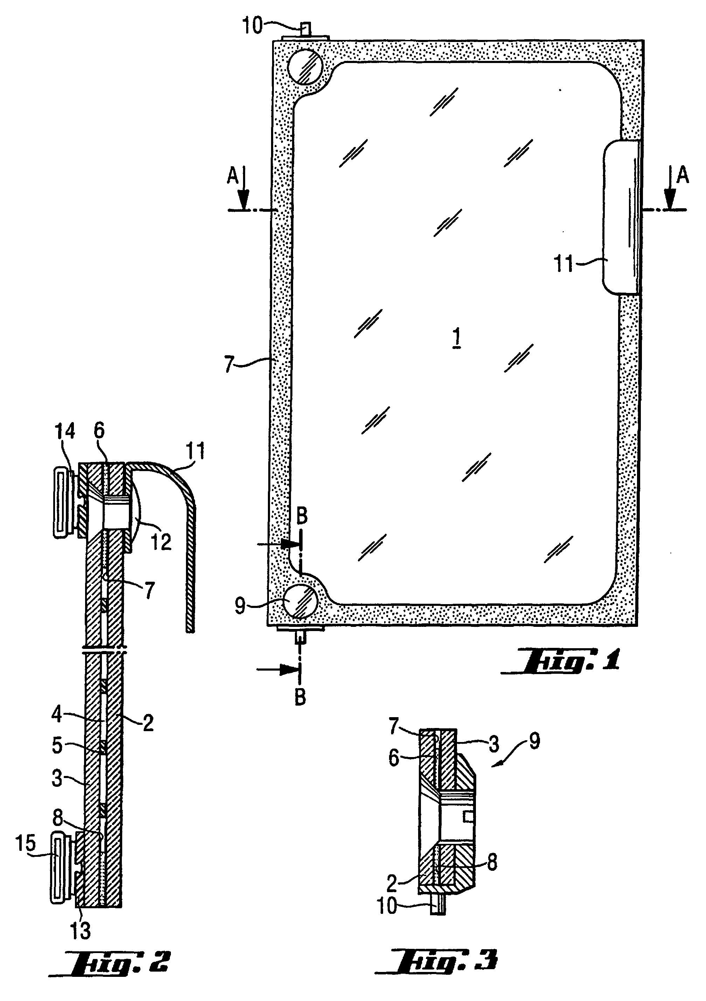

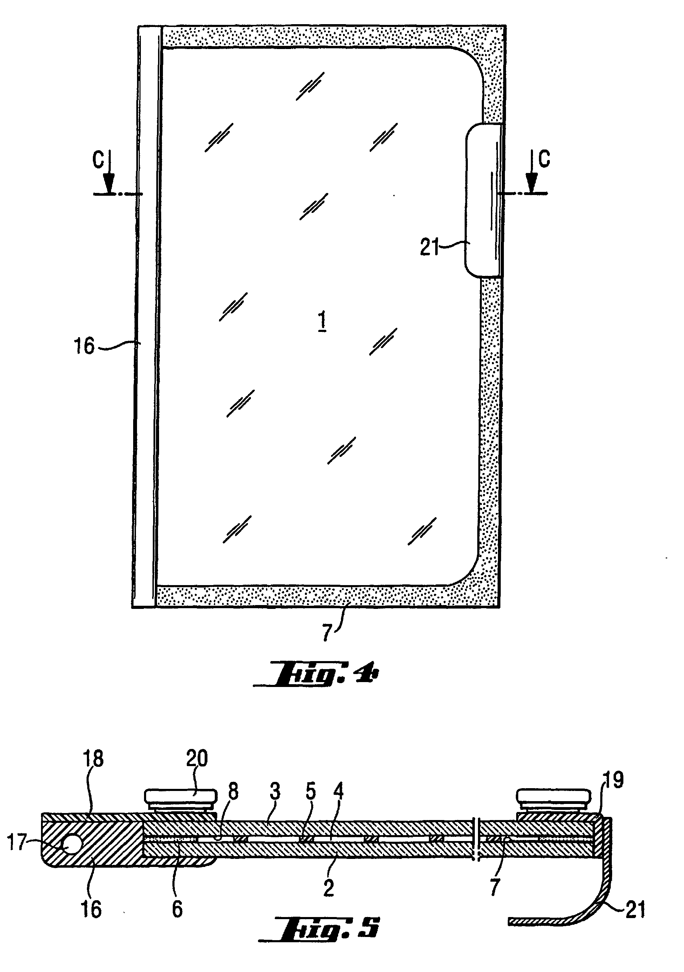

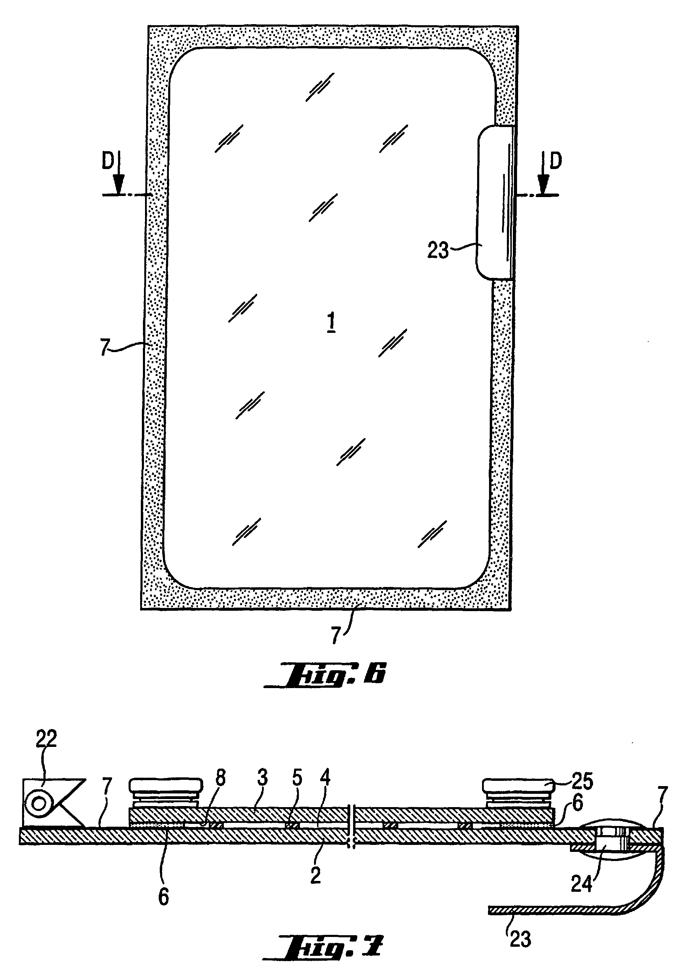

D'autres détails et caractéristiques avantageuses ressortiront, ci-après, de la description d'exemples de réalisation de l'invention en référence aux figures 1, 2, 3, 4, 5, 6 et 7 qui représentent :
. Fig 1 : une vue de face d'une porte d'enceinte réfrigérée selon l'invention,
. Fig 2 : une coupe horizontale selon l'axe AA de la fig. 1,
. Fig 3 : une coupe verticale selon l'axe BB de la fig. 1,
. Fig 4 : une vue de face d'un autre type de porte d'enceinte réfrigérée selon l'invention,
. Fig 5 : une coupe horizontale selon l'axe CC de la fig. 4,
. Fig 6 : une vue de face d'un troisième type de porte d'enceinte réfrigérée selon l'invention,
. Fig 7 : une coupe horizontale selon l'axe DD de la fig. 6.

On précise tout d'abord que, par souci de clarté, toutes les figures ne respectent pas rigoureusement les proportions entre les divers éléments représentés.

Le panneau isolant 1 est constitué de deux feuilles de verre 2 et 3 entre lesquelles un vide 4 a été réalisé, séparées l'une de l'autre par des plots 5 répartis sur toute la surface et réunies à leur périphérie par un joint de scellage minéral 6.

Selon cette représentation, la feuille de verre 2 est revêtue en bordure de sa face interne d'une couche d'émail 7, déposée par sérigraphie de sorte qu'au moins le joint de scellage minéral 6 ne soit pas visible du côté extérieur du panneau isolant 1. La feuille de verre 3 est revêtue en bordure de sa face interne d'une couche mince métallique 8 conductrice ou semi-conductrice, déposée, par exemple, par une technique de pyrolyse.

Cette couche mince métallique 8 est reliée à un circuit électrique par tous moyens connus de l'homme du métier et non représentés sur les figures. De préférence cette couche mince métallique 8 est une couche à base d'oxyde métallique tel que l'oxyde d'étain dopé au fluor et présente une épaisseur géométrique comprise entre 180 et 350 nm et une résistance inférieure ou égale à 50 ohms par carré et de préférence inférieure ou égale à 20 ohms par carré.

Les plots 5 ont une épaisseur de 0,2 millimètre et un diamètre de 0,4 millimètre. Ils sont répartis sur toute la surface des feuilles de verre et sont distants les uns des autres de 30 millimètres.

Les plots 5 sont déposés sur une des feuilles de verre 2 et 3 après que celles-ci aient été revêtues de leurs couches respectives 7 et 8, percées séparément, si nécessaire, pour former un trou, puis trempées. Après dépôt d'un cordon de fritte de verre à la périphérie de la deuxième feuille de verre et des trous si celle-ci en présente, les deux feuilles de verre 2 et 3 sont assemblées, puis on effectue un traitement thermique de l'ensemble pour réaliser la soudure des deux feuilles de verre 2 et 3, le joint de scellage 6 réalisant alors l'étanchéité de l'ensemble. On réalise alors le vide entre les deux feuilles de verre 2 et 3 par tous moyens connus de l'homme de métier tels que, par exemple, par le procédé décrit dans la demande de brevet française déposée au nom de SAINT-GOBAIN VITRAGE sous le numéro 96/09 632. Le panneau isolant 1 est alors prêt à être équipé de ses divers éléments afin de constituer une porte ou paroi selon l'invention.

Les figures 1, 2 et 3 représentent un premier type de réalisation d'une porte selon l'invention.

Selon cette réalisation, le panneau isolant 1 est percé en trois points. Deux des trois trous réalisés dans le panneau isolant 1 sont destinés à recevoir chacun un élément de fixation 9 et sont positionnés de part et d'autre du panneau isolant 1 au niveau d'un des bords verticaux.

Sur la figure 3 est représenté en détail un de ces éléments de fixation 9. Cet élément de fixation 9 est constitué de plusieurs éléments coopérant entre eux de sorte qu'il constitue une partie d'un ensemble charnière dont l'élément femelle 10 saille du panneau isolant 1 au niveau de son chant inférieur et supérieur. On définit par chants inférieur et supérieur, les chants du panneau isolant 1 orienté respectivement vers le bas et vers le haut lorsque le panneau isolant 1 est dans un plan vertical. Ainsi les deux éléments femelle 10 des éléments de fixation 9 sont situés dans le même plan et déterminent l'axe de rotation de la porte selon l'invention. Les éléments de fixation 9 sont montés affleurant à la face du panneau isolant 1 orientée vers l'extérieur de l'enceinte réfrigérée, de cette manière cette face ne présente aucun élément de fixation débordant.

Le troisième trou réalisé dans le panneau isolant 1 est destiné à la fixation d'une poignée de porte 11 à l'aide d'un système de vis-écrou 12 traversant le panneau isolant 1 et monté affleurant à la face du panneau isolant 1 orientée vers l'intérieur de l'enceinte réfrigérée.

Le panneau isolant 1 est muni d'un profilé 13 en matière plastique en périphérie de la feuille de verre 3 sur sa face orientée vers l'intérieur de l'enceinte réfrigérée.

Le profilé 13 peut être soit collé, soit extrudé, soit encapsulé. Quelque soit la technique de dépôt de ce profilé 13, il est façonné de sorte qu'un joint d'étanchéité 14 vienne se clipser dessus. Le joint d'étanchéité 14 est pourvu au niveau de sa partie en contact avec la structure de l'enceinte réfrigérée d'aimants 15 permettant le maintien en position fermée de la porte selon l'invention.

Les figures 4 et 5 représentent un second type de réalisation d'une porte selon l'invention.

Selon cette réalisation, le panneau isolant 1 est muni le long d'un de ces bords verticaux d'un profilé 16 en matière plastique, ce profilé 16 recouvrant le chant et la périphérie de la feuille de verre 2. Le profilé 16 peut être soit collé, soit extrudé, soit encapsulé. Quelque soit la technique de dépôt de ce profilé 16, il présente avantageusement une surépaisseur de matière au niveau du chant du panneau isolant 1, cette partie du profilé présentant une lumière 17 sur toute sa longueur afin qu'un élément de fixation tel qu'un élément d'un système de charnière, puisse y être introduit. De cette manière, ce trou 17 détermine l'axe de rotation de la porte selon l'invention. Avantageusement, grâce à la présence du profilé 16 le long d'un des chants du panneau isolant 1, la couche d'émail 7 peut être déposée uniquement au niveau des trois autres côtés du panneau isolant 1, ledit profilé 16 masquant alors lui-même le joint de scellage 6.

Par ailleurs, le panneau isolant 1, ainsi muni du profilé 16, présente un profilé 18 en matière plastique recouvrant le bord du profilé 16 adjacent à la feuille de verre 3 et le bord de la feuille de verre 3 et un profilé 19 en matière plastique recouvrant le chant et le bord de la feuille de verre 3 sur les trois autres côtés du panneau isolant 1. Ces deux profilés 18 et 19 peuvent également être collés, extrudés, ou encapsulés. Les parties des profilés 18 et 19 recouvrant la périphérie de la feuille de verre 3 sont pourvues d'un joint d'étanchéité 20 aimanté. Le joint d'étanchéité 20 est, au choix, collé, extrudé ou encapsulé.

Le panneau isolant 1 est muni d'une poignée de porte 21 collé sur le profilé 19 en matière plastique au niveau du chant du panneau isolant 1 du côté opposé au profilé 16.

Les figures 6 et 7 représentent un troisième type de réalisation d'une porte selon l'invention.

Selon cette réalisation, la feuille de verre 3 est moins large que la feuille de verre 2 et est centrée sur cette dernière. La couche d'émail 7 déposée sur la feuille de verre 2 recouvre la périphérie de celle-ci de sorte que, vu du côté de la feuille 2, la différence de géométrie des deux feuilles de verre 2 et 3 ne soit pas visible.

Du fait du centrage de la feuille de verre 3 sur la feuille de verre 2, le panneau isolant 1 peut être pourvu de part et d'autre, d'éléments de fixation tels que des charnières 22 et d'accessoires tels qu'une poignée de porte 23 sur les bords débordants de la feuille de verre 2. Avantageusement, les charnières 22 sont collées sur la face interne de la feuille de verre 2, de cette manière elles ne sont pas visibles du côté extérieur du panneau isolant 1 et la poignée de porte 23 peut être facilement fixée par l'intermédiaire d'un système de vis-écrou 24 traversant la feuille de verre 2.

La feuille de verre 3 est pourvue en périphérie d'un joint d'étanchéité 25 aimanté qui peut être soit collé, soit extrudé, soit encapsulé directement sur la feuille de verre.

Les différents types de porte ainsi décrits sont faciles à réaliser et à poser. Elles procurent une isolation thermique incontestable tout en étant particulièrement esthétique.

## Revendications

1. Paroi ou porte d'enceinte vitrée réfrigérée, **caractérisée en ce qu'**elle est constituée essentiellement d'un panneau isolant (1) composé d'au moins deux substrats en verre (2, 3) entre lesquels un vide a été réalisé, séparés l'un de l'autre par des plots (5) répartis sur toute la surface et réunis à leur périphérie par un joint de scellage minéral (6).

2. Paroi ou porte salon la revendication 1, **caractérisée en ce qu'**au moins un substrat en verre (3) est recouvert d'une ou plusieurs couches fonctionnelles (8) sur au moins une de ses faces.

3. Paroi ou porte selon la revendication 1 ou 2, **caractérisée en ce que** la transmission lumineuse TL du panneau isolant (1) est supérieure à 64% et de préférence à 70%, et le coefficient thermique K est inférieur à 1W/m².°K.

4. Paroi ou porte selon l'une des revendications 1 à 3, **caractérisée en ce que** le poids du panneau isolant (1) est inférieur à 25 kg/m², et le coefficient thermique K est inférieur à 1W/m².°K.

5. Paroi ou porte selon l'une des revendications 1 à 4, **caractérisée en ce que** le panneau isolant (1) est pourvu sur au moins une partie de sa surface extérieure d'au moins un profilé(13, 16, 18, 19), notamment en matière plastique.

6. Paroi ou porte selon la revendication 5, **caractérisée en ce que** le profilé (13, 16, 18, 19) est collé.

7. Paroi ou porte selon la revendication 5 ou 6, **caractérisée en ce que** le profilé (13, 16, 18, 19) est un profilé extrudé.

8. Paroi ou porte selon la revendication 5 ou 6, **caractérisée en ce que** le profilé (16) est un profilé en matière plastique surmoulé obtenu par injection réactive ou thermoplastique.

9. Paroi ou porte selon l'une des revendications 1 à 8, **caractérisée en ce que le** panneau isolant (1) est pourvu d'éléments de fixation (9, 22) et d'accessoires (21, 23).

10. Paroi ou porte selon la revendication 9, **caractérisée en ce que** les éléments de fixation (9) et les accessoires sont associés au panneau isolant par l'intermédiaire) de trous traversant l'épaisseur de celui-ci.

11. Paroi ou porte selon la revendication 9, **caractérisée en ce que** les éléments de fixation (22) et les accessoires (21, 23) sont collés sur le panneau isolant (1).

12. Paroi ou porte salon la revendication 9, **caractérisée en ce que** les éléments de fixation et les accessoires (21) sont insérés dans un profilé (19) en matière plastique.

13. Paroi ou porte selon l'une des revendications 1 à 12, **caractérisée en ce que** le panneau isolant (1) est pourvu d'au moins un élément de chauffage sur au moins sa périphérie.

14. Paroi ou porte selon la revendication 13, **caractérisée en ce que** un cordon de chauffage est noyé dans la joint de scellage minéral.

15. Paroi ou porte selon la revendication 13, **caractérisée en ce que** un cordon de chauffage est disposé en périphérie du panneau isolant dans au moins une partie du profilé.

16. Paroi ou porte selon la revendication 13, **caractérisée en ce que** une couche conductrice (8) est déposée au moins en périphérie sur au moins une des faces d'au moins un des substrats en verre (3) du panneau isolant.

17. Paroi ou porte selon l'une des revendications 1 à 16, **caractérisée en ce que le** panneau isolant présente sur sa face orientée vers l'intérieur de l'enceinte réfrigerée des joints d'étanchéité (14, 25) disposés en regard des montants de ladite enceinte réfrigérée.

18. Paroi ou porte selon la revendication 17, **caractérisée en ce que** lesdits joints d'étanchéité (14, 25) sont collés ou extrudés ou encapsulés directement sur le panneau isolant.

19. Paroi ou porte selon la revendication 17, **caractérisée en ce que** lesdits joints (14, 25) ont collés ou extrudés ou encapsulés ou clipsés sur un profilé périphérique.

20. Paroi ou porte selon selon l'une des revendications 1 à 19, **caractérisée en ce que** le panneau isolant (1) présente sur au moins une de ses faces au moins une zone émaillée (7).

## Patentansprüche

1. Wand oder Tür für einen Kühlbehälter aus Glas, **dadurch gekennzeichnet, dass** sie im Wesentlichen aus einem Isolierfeld (1) besteht, das aus mindestens zwei Glassubstraten (2, 3) zusammengesetzt ist, zwischen denen ein Vakuum erzeugt worden ist, und welche voneinander durch über die gesamte Fläche verteilte Stifte (5) getrennt und an ihrem Umfang durch eine anorganische Dichtung (6) verbunden sind.

2. Wand oder Tür nach Anspruch 1, **dadurch gekennzeichnet, dass** wenigstens ein Glassubstrat (3) auf mindestens einer Seite mit einer oder mehreren funktionellen Schichten (8) überzogen ist.

3. Wand oder Tür nach Anspruch 1 oder 2, **dadurch gekennzeichnet, dass** der Lichttransmissionsgrad T_{L} des Isolierfelds (1) mehr als 64 % und vorzugsweise als 70 % und die Wärmedurchgangszahl weniger als 1 W/m².°K beträgt.

4. Wand oder Tür nach einem der Ansprüche 1 bis 3, **dadurch gekennzeichnet, dass** das Gewicht des Isolierfelds (1) weniger als 25 kg/m² und die Wärmedurchgangszahl K weniger als 1 W/m².°K beträgt.

5. Wand oder Tür nach einem der Ansprüche 1 bis 4, **dadurch gekennzeichnet, dass** das Isolierfeld (1) auf wenigstens einem Teil der Außenfläche mit mindestens einem insbesondere aus Kunststoff bestehenden Profil (13, 16, 18, 19) versehen ist.

6. Wand oder Tür nach Anspruch 5, **dadurch gekennzeichnet, dass** das Profil (13, 16, 18, 19) aufgeklebt ist.

7. Wand oder Tür nach Anspruch 5 oder 6, **dadurch gekennzeichnet, dass** das Profil (13, 16, 18, 19) aufextrudiert ist.

8. Wand oder Tür nach Anspruch 5 oder 6, **dadurch gekennzeichnet, dass** das Profil (16) aus aufgeformtem Kunststoff besteht und durch reaktives oder thermoplastisches Spritzgießen erhalten worden ist.

9. Wand oder Tür nach einem der Ansprüche 1 bis 8, **dadurch gekennzeichnet, dass** das Isolierfeld (1) mit Befestigungselementen (9, 22) und Zubehörteilen (21, 23) versehen ist.

10. Wand oder Tür nach Anspruch 9, **dadurch gekennzeichnet, dass** die Befestigungselemente (9) und die Zubehörteile mit dem Isolierfeld über durch dieses hindurchgehende Löcher verbunden sind.

11. Wand oder Tür nach Anspruch 9, **dadurch gekennzeichnet, dass** die Befestigungselemente (22) und die Zubehörteile (21, 23) auf das Isolierfeld (1) geklebt sind.

12. Wand oder Tür nach Anspruch 9, **dadurch gekennzeichnet, dass** die Befestigungselemente und die Zubehörteile (21) in ein Kunststoffprofil (19) eingefügt sind.

13. Wand oder Tür nach einem der Ansprüche 1 bis 12, **dadurch gekennzeichnet, dass** das Isolierfeld (1) wenigstens am Rand mit mindestens einem Heizelement versehen ist.

14. Wand oder Tür nach Anspruch 13, **dadurch gekennzeichnet, dass** in die anorganische Dichtung ein Heizdraht eingebettet ist.

15. Wand oder Tür nach Anspruch 13, **dadurch gekennzeichnet, dass** am Rand des Isolierfelds in mindestens einem Teil des Profils ein Heizdraht angeordnet ist

16. Wand oder Tür nach Anspruch 13, **dadurch gekennzeichnet, dass** wenigstens am Rand auf mindestens einer Seite mindestens eines Glassubstrats (3) des Isolierfelds eine leitfähige Schicht (8) aufgebracht ist.

17. Wand oder Tür nach einem der Ansprüche 1 bis 16, **dadurch gekennzeichnet, dass** das Isolierfeld auf der zum Inneren des Kühlbehälters zeigenden Seite Dichtungen (14, 25) besitzt, die gegenüber den senkrechten Streben dieses Kühlbehälters angeordnet sind.

18. Wand oder Tür nach Anspruch 17, **dadurch gekennzeichnet, dass** die Dichtungen (14, 25) direkt auf das Isolierfeld geklebt, extrudiert oder umkapselt sind.

19. Wand oder Tür nach Anspruch 17, **dadurch gekennzeichnet, dass** die Dichtungen (14, 25) auf ein Randprofil geklebt, extrudiert, umkapselt oder geklemmt sind.

20. Wand oder Tür nach einem der Ansprüche 1 bis 19, **dadurch gekennzeichnet, dass** das Isolierfeld (1) auf wenigstens einer Seite mindestens einen emaillierten Bereich (7) besitzt.

## Claims

1. Wall or door of a refrigerated, glazed enclosure, **characterized in that** it is essentially constituted by an insulating panel (1) formed from at least two glass substrates (2, 3) between which a vacuum has been formed and which are separated from one another by elements (5) distributed over the entire surface and joined at their periphery by a mineral sealing joint (6).

2. Wall or door according to claim 1, **characterized in that** at least one glass substrate (3) is covered by one or more functional layers (8) on at least one of its faces.

3. Wall or door according to claim 1 or 2, **characterized in that** the light transmission TL of the insulating panel (1) exceeds 64% and preferably 70%, and the thermal expansion coefficient K is below 1 W/m².°K.

4. Wall or door according to one of the claims 1 to 3, **characterized in that** the weight of the insulating panel (1) is below 25 kg/m² and the thermal expansion coefficient K is below 1 W/m².°K.

5. Wall or door according to one of the claims 1 to 4, **characterized in that** the insulating panel (1) is provided on at least one part of its outer surface with at least one section (13, 16, 18, 19), more particularly of a plastics material.

6. Wall or door according to claim 5, **characterized in that** the section (13, 16, 18, 19) is bonded.

7. Wall or door according to claim 5 or 6, **characterized in that** the section (13, 16, 18, 19) is an extruded section.

8. Wall or door according to claim 5 or 6, **characterized in that** the section (16) is an overmoulded, plastics material section obtained by thermoplastic or reactive injection.

9. Wall or door according to one of the claims 1 to 8, **characterized in that** the insulating panel (1) is provided with fixing members (9, 22) and accessories (21, 23).

10. Wall or door according to claim 9, **characterized in that** the fixing members (9) and accessories are combined with the insulating panel by means of holes passing through the thickness thereof.

11. Wall or door according to claim 9, **characterized in that** the fixing members (22) and accessories (21, 23) are bonded to the insulating panel (1).

12. Wall or door according to claim 9, **characterized in that** the fixing members and the accessories (21) are inserted in a plastics material section (19).

13. Wall or door according to one of the claims 1 to 12, **characterized in that** the insulating panel (1) is provided on at least its periphery with at least one heating element.

14. Wall or door according to claim 13, **characterized in that** a heating cord is embedded in the mineral sealing joint.

15. Wall or door according to claim 13, **characterized in that** a heating cord is placed on the periphery of the insulating panel in at least part of the section.

16. Wall or door according to claim 13, **characterized in that** a conductive layer (8) is deposited at least peripherally on at least one of the faces of at least one of the glass substrates (3) of the insulating panel.

17. Wall or door according to one of the claims 1 to 16, **characterized in that** the insulating panel has on its face oriented towards the interior of the refrigerated enclosure seals (14, 25) facing posts of said refrigerated enclosure.

18. Wall or door according to claim 17, **characterized in that** said seals (14, 25) are bonded or extruded or encapsulated directly on the insulating panel.

19. Wall or door according to claim 17, **characterized in that** the seals (14, 25) are bonded or extruded or encapsulated or clipped to a peripheral section.

20. Wall or door according to one of the claims 1 to 19, **characterized in that** the insulating panel (1) is provided on at least one of its faces with at least one enamelled area (7).
